Europäisches Patentamt

European Patent Office

Office européen des brevets

(19)

(11) Numéro de publication : **0 107 533**
**B1**

(12) · **FASCICULE DE BREVET EUROPÉEN**

(45) Date de publication du fascicule du brevet : 21.11.85

(51) Int. Cl.⁴ : **B 65 G 35/08**

(21) Numéro de dépôt : 83401808.7

(22) Date de dépôt : 15.09.83

(54) **Machine transfert pour porte-pièces.**

(30) Priorité : 06.10.82 FR 8216848

(43) Date de publication de la demande :
02.05.84 Bulletin 84/18

(45) Mention de la délivrance du brevet :
21.11.85 Bulletin 85/47

(84) Etats contractants désignés :
BE CH DE GB IT LI NL SE

(56) Documents cités :
FR-A- 2 135 061
GB-A- 2 073 691
US-A- 3 561 365

(73) Titulaire : **CROUZET**
**128, Avenue de la République**
**F-75011 Paris (FR)**

(72) Inventeur : **Bonfils, Jacky**
**25 rue Jules Védrines**
**F-26027 Valence cedex (Drôme) (FR)**
Inventeur : **Gallice, Pierre**
**25 rue Jules Védrines**
**F-26027 Valence cedex (Drôme) (FR)**
Inventeur : **Lafaurie, Roger**
**25 rue Jules Védrines**
**F-26027 Valence cedex (Drôme) (FR)**
Inventeur : **Mazet, Georges**
**25 rue Jules Védrines**
**F-26027 Valence cedex (Drôme) (FR)**
Inventeur : **Reynaud, Jean-Marc**
**25 rue Jules Védrines**
**F-26027 Valence cedex (Drôme) (FR)**

(74) Mandataire : **Bloch, Robert et al**
**39 avenue de Friedland**
**F-75008 Paris (FR)**

## Description

La présente invention concerne une machine transfert comprenant un chemin de transfert, des porte-pièces comportant une partie destinée à être entraînée d'un poste à un autre suivant une direction de transfert, ladite partie étant disposée dans le chemin de transfert et comportant un organe de guidage, le chemin de transfert comportant des moyens agencés pour coopérer avec ledit organe.

Une telle machine est notamment connue par le document FR-A-2 135 061.

Toutefois, avec la machine de ce document, pour présenter sous les divers postes de travail les six faces d'un cube pris comme pièce de référence, il faut disposer d'éléments de transfert rectilignes ou courbes placées bout à bout mais dans des plans différents. Bref, l'inclinaison des porte-pièces y implique l'inclinaison de diverses parties du chemin de transfert. Il en résulte un encombrement excessif de ce chemin de transfert.

Dans d'autres machines, il est prévu des postes spéciaux, dits postes de retournement, disposés dans le chemin de transfert. Ces postes comportent des moyens agencés pour prendre la pièce, soit seule après l'avoir désolidarisée du porte-pièce, soit seule après l'avoir désolidarisée du porte-pièce, soit avec le porte-pièce, pour effectuer les rotations correspondant à la face que l'on souhaite rendre accessible à l'usinage ou pour l'assemblage.

La présente invention vise donc à proposer une machine transfert peu encombrante et dans laquelle les porte-pièces peuvent facilement être orientés de façons différentes.

A cet effet, la présente invention concerne une machine transfert du type indiqué ci-dessus, caractérisé par le fait que ladite partie est cylindrique et lesdits moyens sont agencés pour entraîner ledit organe en rotation perpendiculairement à la direction de transfert.

La machine de l'invention permet ainsi, sans accessoires complexes ou onéreux ni chemin de transfert encombrant, d'orienter les pièces, de telle sorte que cinq des six faces d'un cube soient très facilement présentables sous les postes de travail.

Le porte-pièces selon l'invention peut comporter trois parties :

un plateau pourvu de moyens de fixation des pièces, ces moyens pouvant être des brides, des genouillères ou tous autres moyens classiques mécaniques ou magnétiques ;

un corps de guidage, cylindrique ;

une tige assurant la liaison entre le plateau et le corps de guidage.

Cette tige, de préférence cylindrique, est avantageusement située dans le plan médian du corps cylindrique. C'est cette tige, guidée par une fente aménagée dans le chemin de transfert, qui permet d'obtenir la rotation de l'ensemble porte-pièces autour de l'axe longitudinal de son corps cylindrique lors des mouvements de transfert en pas à pas.

Le chemin de transfert est de préférence réalisé à partir d'un tube fendu dont les dimensions de l'âme sont compatibles avec un bon guidage glissant du corps cylindrique du porte-pièces. Ce tube est également cylindrique mais une section carrée adéquate pourrait aussi bien assurer la fonction de guidage. La direction générale de la fente correspond à la direction de transfert mais elle a une orientation différente, par exemple perpendiculaire à cette direction, si l'on veut faire pivoter le porte-pièces perpendiculairement à cette direction. Ceci permet, par exemple par des moyens classiques, tels que pignon et crémaillère ou bague tournante disposée autour du chemin de transfert, de verrouiller le porte-pièces en certains points du transfert. Mais la disposition la plus avantageuse de ce système de transfert consiste à rendre certaines portions du chemin de transfert indépendante et de les associer à des moyens de retournement autour de leur axe de symétrie médian.

On peut ainsi faire faire un demi-tour aux pièces transférées ou encore un quart de tour, dans un sens ou dans l'autre, par exemple aux quatre coins d'un chemin de transfert rectangulaire ou de tout autre forme polygonale.

Dans les machines transferts automatiques, il est avantageux de réduire au maximum les temps morts par rapport aux temps de travail.

Les temps morts sont les temps de transfert, c'est-à-dire notamment ceux correspondant au déplacement des pièces d'un poste de travail vers un autre, et ceux nécessaires pour préorienter les pièces, par des moyens connus extérieurs au chemin de transfert, tels que les postes de retournement. Dans la machine de l'invention, ces changements d'orientation peuvent être réalisés pendant le temps de transfert. Pour cela, il suffit que, sur la distance de un ou plusieurs pas, de l'avance en pas à pas, la fente ne soit plus rectiligne mais hélicoïdale. Cette disposition permet d'obtenir n'importe quelle préorientation de la pièce de 0 à 360 °C autour de son axe de transfert.

Cette possibilité combinée avec une ou plusieurs portions du chemin de transfert pouvant pivoter de 180° ou de 90° permet d'accéder très facilement, et sans perte de temps, aux cinq faces visibles d'un cube fixé sur le plateau du porte-pièces.

La présente invention sera mieux comprise à l'aide de la description suivante d'une forme de réalisation préférée de la machine de l'invention, en référence aux dessins annexés, sur lesquels :

La figure 1 représente une vue du porte-pièces de l'invention, en demi-coupe, et

la figure 2 représente une portion en perspective de la machine transfert de l'invention, avec différents modules caractéristiques d'un chemin de transfert selon l'invention.

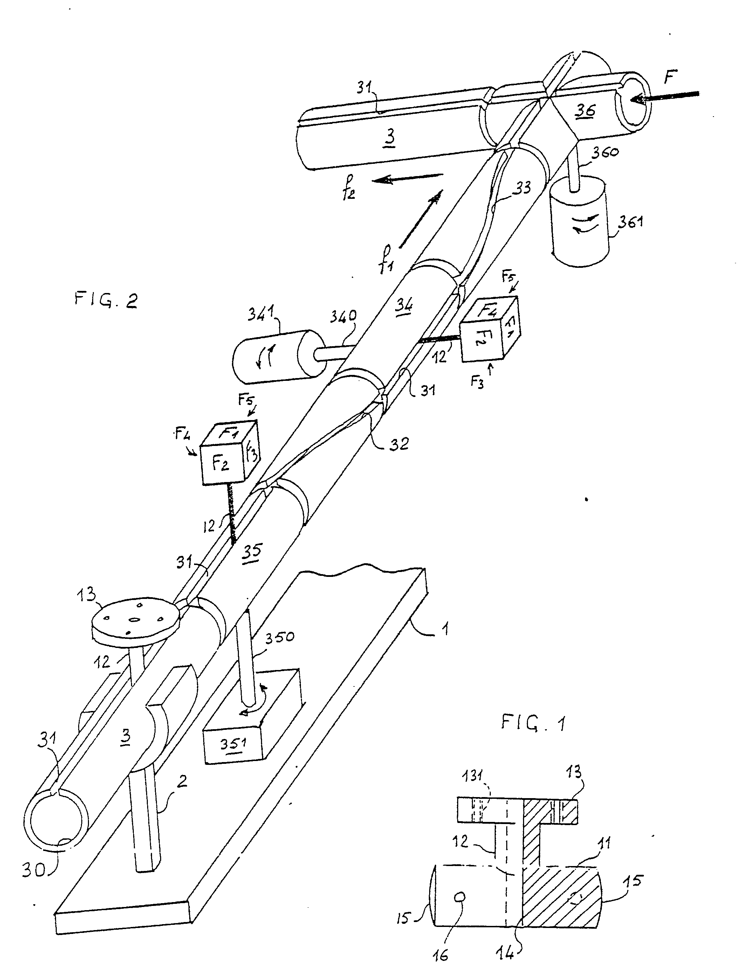

Tel que représenté, figure 1, le porte-pièces de la machine comporte trois parties principales :

Un plateau 13, pourvu de trous filetés 131 pour la fixation de moyens de maintien des pièces ;

un corps cylindrique 11, dont les extrémités 15 ont chacune la forme d'une calotte sphérique, dont le rayon est inférieur ou au plus égal à la demi-longueur du corps. Ces calottes, lorsque les porte-pièces sont alignés les uns contre les autres à l'intérieur du chemin de transfert, facilitent la rotation de l'un d'entre eux sans réaction sur ses voisins ;

une partie cylindrique 12 assure la liaison mécanique entre le plateau 13 et le corps 11. Cette tige 12 est avantageusement disposée dans le plan médian du corps 15. Un trou 14 traverse de part en part le corps 11, la tige 12 et le plateau 13. Ce trou permet, au moyen d'une tige, manipulée au moyen d'un vérin par exemple, d'éjecter les pièces fixées sur le plateau 13, en fin d'usinage ou d'assemblage.

Le chemin de transfert est réalisé au moyen d'éléments tubulaires cylindriques 3, dont l'alésage interne 30 permet le passage, avec jeu, du corps cylindrique 11 des porte-pièces. Ces éléments tubulaires sont fendus suivant une génératrice rectiligne 31 ou une portion d'hélice 32 et 33, agencée pour entraîner les porte-pièces en rotation perpendiculairement à la direction de transfert.

D'une façon générale, les éléments tubulaires 3 sont disposés bout à bout, pour former un chemin de transfert rigide, en les fixant au moyen de supports 2 sur un bâti rigide 1.

Leurs fentes, dont la largeur permet juste le passage de la tige 12, sont disposées en regard les unes des autres pour former un guide continu tout le long du chemin de transfert. Certains éléments tubulaires sont reliés à des moyens agencés pour les faire pivoter autour d'un axe situé dans leur plan médian. Ainsi l'élément 35 est relié, par une tige rigide 350, à un dispositif moteur 351, hydraulique, pneumatique ou électrique, agencé pour lui transmettre une rotation de 180° autour d'un axe vertical perpendiculaire à la direction de transfert. L'élément 34 quant à lui est relié par une tige 340 à des moyens 341 agencés pour lui transmettre une rotation quelconque autour d'un axe horizontal perpendiculaire à la direction de transfert.

Pour réaliser, par exemple, un chemin de transfert rectangulaire, on disposera aux quatre coins du rectangle un élément crussiforme 36 relié, par une tige 360, à des moyens 361 agencés pour lui transmettre une rotation d'un quart de tour dans un sens ou dans l'autre autour d'un axe vertical, confondu avec son axe de symétrie.

Ces éléments cruciformes 36 permettent des changements de direction à 90° du chemin de transfert. Ils sont pourvus de moyens, tels que des billes soumises à l'action de ressorts et coopérant avec des évidements 16 aménagés à la surface du corps 11, pour positionner correctement les porte-pièces à l'intérieur du module de transfert 36 avant d'effectuer un changement de direction.

Ainsi, les porte-pièces venant de la direction $f_1$ sont poussés dans la direction $f_2$ au moyen d'un vérin de course F.

Suivant le sens de rotation du modèle 36, les porte-pièces peuvent être ou non retournés de 180° avant de poursuivre leur marche dans la direction $f_2$.

Ce dispositif de chemin de transfert modulaire, dont chaque module a une longueur correspondant à la longueur du corps du porte-pièces, ou à un multiple de cette longueur, est d'une grande souplesse d'emploi. Il permet d'atteindre facilement cinq des six faces d'un cube qui serait fixé sur les plateaux. En effet, les porte-pièces étant enfilés à la suite les uns des autres dans le chemin de transfert, ils sont alternativement poussés en pas à pas par des vérins, dans chacune des branches du chemin de transfert. La course de ces vérins correspond à la longueur du corps d'un porte-pièces de telle sorte, qu'à l'arrêt, aucun porte-pièce n'est engagé entre deux modules du chemin de transfert.

Ainsi, si dans le module 35 un cube a sa face $F_1$ disposée sur le dessus, après passage dans la portion hélicoïdale 32 de la fente de guidage, ce sera sa face $F_4$ qui sera sur le dessus dans le module suivant 34. Par contre si, au préalable, on avait fait pivoter le module 35 de 180°, ce serait sa face $F_3$ qui se serait présentée sur le dessus dans le module 34. Enfin, si le module 34 est lui-même relié à des moyens 341 permettant de le faire tourner d'un quart de tour à droite ou à gauche autour d'un axe horizontal, on peut comprendre aisément que les faces $F_2$ et $F_5$ de ce même cube peuvent également être accessibles sur le poste 34. Le dispositif objet de l'invention se prête particulièrement bien à la réalisation de machines transferts destinées à l'assemblage en automatique de produits industriels.

## Revendications

1. Machine transfert comprenant un chemin de transfert (3), des porte-pièces comportant une partie (11) destinée à être entraînée d'un poste à un autre suivant une direction de transfert, ladite partie (11) étant disposée dans le chemin de transfert (3) et comportant un organe de guidage (12), le chemin de transfert (3) comportant des moyens (31 ; 32 ; 33) agencés pour coopérer avec ledit organe (12), caractérisée par le fait que ladite partie (11) est cylindrique et lesdits moyens (31 ; 32 ; 33) sont agencés pour entraîner ledit organe (12) en rotation perpendiculairement à la direction de transfert.

2. Machine transfert selon la revendication 1, caractérisée par le fait que le chemin de transfert (3) comporte, juxtaposés, des éléments (3, 34, 35) tubulaires cylindriques fendus, dont les fentes (31 ; 32 ; 33) sont disposées en regard les unes des autres et dont au moins certaines (32, 33) sont hélicoïdales pour entraîner en rotation l'organe de guidage (12) des porte-pièces.

3. Machine transfert selon l'une des revendications 1 et 2, caractérisée par le fait que lesdites parties (11) des porte-pièces sont alignées, au contact les unes des autres, dans le chemin de transfert (3), elles ont toutes la même longueur, et qu'elles sont poussées en pas à pas par des vérins dont la course est égale à leur longueur.

4. Machine transfert selon l'une des revendications 1 à 3, caractérisée par le fait que certains éléments (34 ; 35 ; 36) du chemin de transfert peuvent pivoter autour d'un axe situé dans leur plan médian.

**Claims**

1. Transfer machine comprising a transfer path (3), work-piece-holders comprising a part (11) adapted to be driven from one station to another in a transfer direction, said part (11) being disposed in the transfer path (3) and comprising a guiding member (12), the transfert path (3) comprising means (31 ; 32 ; 33) adapted to cooperate with said member (12), characterized in that said part (11) is cylindrical and said means (31 ; 32 ; 33) are arranged to drive said member (12) in rotation perpendicularly to the transfer direction.

2. Transfer machine of Claim 1, characterized in that the transfer path (3) comprises, juxtaposed, split cylindrical tubular elements (3, 34, 35), of which the slots (31 ; 32 ; 33) are disposed opposite one another and of which at least certain (32, 33) are helicoidal in order to drive the member (12) guiding the workpiece-holders in rotation.

3. Transfert machine of one of Claims 1 and 2, characterized in that said parts (11) of the work-piece-holders are aligned, in contact with one another, in the transfer path (3), they all have the same length, and they are pushed step by step by jacks whose stroke is equal to their length.

4. Transfer machine of one of Claims 1 to 3, characterized in that certain elements (34 ; 35 ; 36) of the transfer path may pivot about an axis lying in their median plane.

**Patentansprüche**

1. Transfermaschine, die einen Transferweg (3) und Werkstückträger aufweist, die einen Teil (11) enthalten, der dafür vorgesehen ist, entlang einer Transferrichtung aus einer Station in einer anderen Station bewegt zu werden, wobei der Teil (11) in dem Transferweg (3) angeordnet ist und ein Führungsorgan (12) umfaßt, während der Transferweg (3) Elemente (31 ; 32 ; 33) enthält, die mit dem Organ (12) zusammenzuwirken vermögen, dadurch gekennzeichnet, daß der Teil (11) zylindrisch ist und die Elemente (31 ; 32 ; 33) gestaltet sind, um das Organ (12) zu einer Rotation senkrecht zur Transferrichtung anzutreiben.

2. Transfermaschine nach Anspruch 1, dadurch gekennzeichnet, daß der Transferweg (3) aneinander angrenzende geschlitzte zylindrische Rohrelemente (3, 34, 35) umfaßt, deren Schlitze (31 ; 32 ; 33) sich aneinander anschließen, von denen mindestens bestimmte (32, 33) spiralförmig verlaufen, um das Führungsorgan (12) der Werkstückträger zu einer Rotationsbewegung anzutreiben.

3. Transfermaschine nach einem der Ansprüche 1 und 2, dadurch gekennzeichnet, daß die Teile (11) der Werkstückträger in dem Transferweg (3) ausgerichtet sind, wobei die einen mit den anderen in Kontakt sind, daß die Teile (11) alle die gleiche Länge haben, und daß sie schrittweise mittels Stellgliedern vorwärtsbewegbar sind, deren jeweiliger Hub gleich ihrer Länge ist.

4. Transfermaschine nach einem der Ansprüche 1 bis 3, dadurch gekennzeichnet, daß bestimmte Elemente (34 ; 35 ; 36) des Transferweges um eine Achse drehbar sind, die in ihrer Mittelebene liegt.

**FIG. 2**

**FIG. 1**